(19) Europäisches Patentamt
European Patent Office
Office européen des brevets

(11) EP 3 653 405 A1

(12) EUROPEAN PATENT APPLICATION
published in accordance with Art. 153(4) EPC

(43) Date of publication:
20.05.2020 Bulletin 2020/21

(51) Int Cl.:
B60C 15/06 (2006.01)

(21) Application number: 18831005.6

(22) Date of filing: 19.06.2018

(86) International application number:
PCT/JP2018/023284

(87) International publication number:
WO 2019/012924 (17.01.2019 Gazette 2019/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.07.2017 JP 2017135496

(71) Applicant: Bridgestone Corporation
Tokyo 104-8340 (JP)

(72) Inventor: SATO, Akihito
Tokyo 104-8340 (JP)

(74) Representative: Oxley, Robin John George
Marks & Clerk LLP
15 Fetter Lane
London EC4A 1BW (GB)

(54) **HEAVY-DUTY TIRE**

(57) A chafer (100) of a heavy load tire (10) is arranged between a bead core (61) and a carcass (40) and is formed by an organic fiber. As a distance L1 is defined by a linear distance between a bead innermost portion (61p), which is a portion of the bead core (61) at an innermost side in the tire width direction, and an outer end (100a) in a tire radial direction of the chafer 100, and a distance L2 is defined by a linear distance between the bead innermost portion (61p) and a carcass outermost portion (40p), which is a portion of a carcass body portion (42) at an outermost side in the tire width direction, $L1/L2 \leq 5/12$ is fulfilled.

FIG. 2

**Description**

[Technical Field]

The present invention relates to a heavy load tire including a chafer that covers at least a part of a bead portion.

[Background Art]

In a heavy load tire mounted to a vehicle such as a construction vehicle and an industrial vehicle to which a heavy load is applied, a structure including a chafer formed by a wire and a chafer formed by an organic fiber that are arranged along a carcass at an outer side of the carcass in order to improve durability of a bead portion is known (for example, Patent Literature 1).

[Citation List]

[Patent Literature]

[PTL 1] Japanese Unexamined Patent Application Publication No. 2006-168500

[Summary of Invention]

In recent years, a vehicle has been often used in a severe environment, specifically an environment under a high load at a high speed, in accordance with performance improvement of the vehicle and requirement for further efficiency. Thus, further high durability is desired to a heavy load tire mounted to such vehicles.

In particular, when a heavy load is applied, a possibility to damage a bead portion, specifically a possibility to damage a carcass around the bead portion, is increased. However, it is preferable that an increase of weight of the tire is suppressed as much as possible because other performance such as suspension following performance is deteriorated.

Accordingly, an object of the present invention is, in consideration of the problem described above, to provide a heavy load tire capable of further improving durability of a bead portion while suppressing an increase of weight of the tire.

A heavy load tire (heavy load tire 10) according to one aspect of the present invention includes a bead portion (bead portion 60) including a bead core (bead core 61), a carcass (carcass 40) including a folded portion (folded portion 41) folded from an inner side in a tire width direction toward an outer side in the tire width direction of the bead portion and a carcass body portion (carcass body portion 42) continued to the folded portion and extended to the tread portion (tread portion 20), and a chafer (chafer 100) that covers at least a part of the bead portion. The chafer is arranged between the bead core and the carcass and is formed by an organic fiber coated with a rubber component. As a distance L1 is defined by a linear distance between a bead innermost portion (bead innermost portion 61p), which is a portion of the bead core at an innermost side in the tire width direction, and an outer end (outer end 100a) in a tire radial direction of the chafer, and a distance L2 is defined by a linear distance between the bead innermost portion and a carcass outermost portion (carcass outermost portion 40p), which is a portion of the carcass at an outermost side in the tire width direction, Formula 1 is fulfilled.

$$\text{Formula 1}$$

$$\frac{L1}{L2} \leq \frac{5}{12}$$

[Brief Description of Drawings]

[Fig. 1] Fig. 1 is a cross-sectional view along a tire width direction and a tire radial direction illustrating a part of a heavy load tire 10.
[Fig. 2] Fig. 2 is a cross-sectional view along the tire width direction and the tire radial direction illustrating a part of the heavy load tire 10.
[Fig. 3] Fig. 3 is an enlarged cross-sectional view along the tire width direction and the tire radial direction illustrating a bead portion 60 of the heavy load tire 10.

[Fig. 4] Fig. 4 is a graph illustrating a simulation example based on a result of a durability test according to a conventional example and an example (heavy load tire 10).

[Fig. 5] Fig. 5 is an enlarged cross-sectional view illustrating a bead portion 60 according to a modified example.

[Fig. 6] Fig. 6 is an enlarged cross-sectional view illustrating a bead portion 60 according to another modified example.

[Description of Embodiments]

Hereinafter, embodiments will be described with reference to the drawings. The same reference signs or similar reference signs are assigned to the same functions or the same components and the description thereof is omitted as needed.

(1) Schematic whole configuration of pneumatic tire

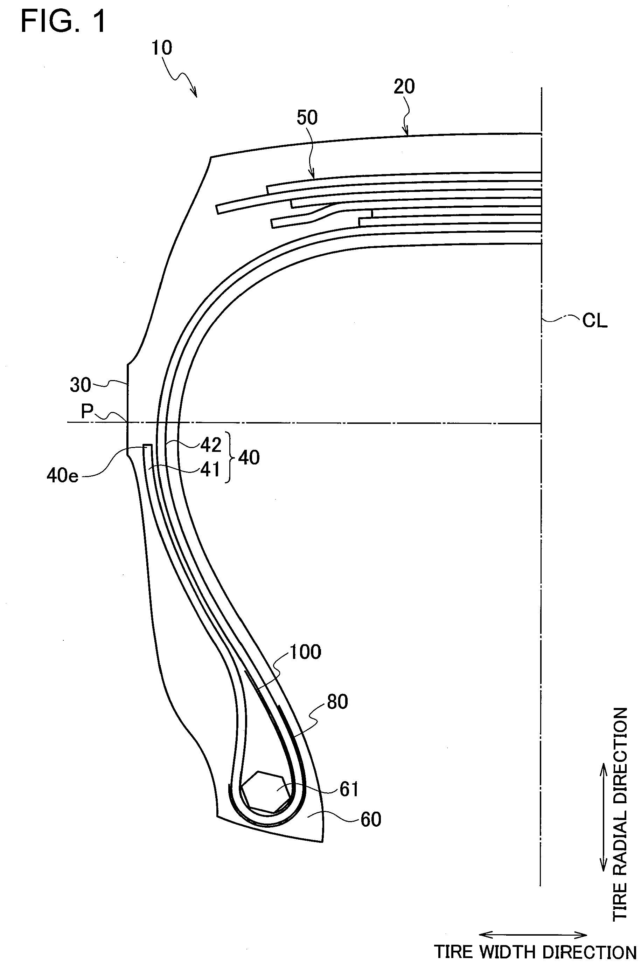

Fig. 1 is a cross-sectional view along a tire width direction and a tire radial direction illustrating a part of a heavy load tire 10.

As shown in Fig. 1, the heavy load tire 10 is provided with a tread portion 20 and a tire side portion 30. In Fig. 1, a part at one side with respect to a tire equatorial line CL is illustrated, however a part at another side with respect to the tire equatorial line CL is similar (symmetry) to the part at the one side.

The heavy load tire 10 is preferably used in, for example, a construction vehicle or an industrial vehicle such as a dump truck, an articulate dump truck, and a wheel loader travelling on a macadam road or travelling in a mine or a dam construction site. That is, the heavy load tire 10 is formed as a pneumatic tire mounted to a vehicle such as a construction vehicle and an industrial vehicle to which a heavy load is applied. Gas other than air (for example, nitrogen gas), or a small amount of liquid (for example, coolant) may be filled in the heavy load tire 10 mounted to a rim wheel (not shown).

The tread portion 20 is a portion that contacts a road surface. Practically, a pattern (not shown) corresponding to a use environment of the heavy load tire 10 or a type of a vehicle to which the heavy load tire 10 is mounted is formed on the tread portion 20.

The tire side portion 30 is continued to the tread portion 20 and is located at an inner side in a tire radial direction with respect to the tread portion 20. Specifically, the tire side portion 30 is a portion between an outer end in a tire width direction of the tread portion 20 and an upper end of a bead portion 60. The tire side portion 30 is also called a side wall.

A carcass 40 forms a frame of the heavy load tire 10. The carcass 40 is folded via the bead portion 60 from an inner side in the tire width direction toward an outer side in the tire width direction so as to be extended to the tread portion 20. The carcass 40 includes a folded portion 41 folded via the bead portion 60 from the inner side in the tire width direction toward the outer side in the tire width direction, and a carcass body portion 42 continued to the folded portion 41 and extended to the tread portion 20.

An outer end 40e in the tire width direction of the carcass 40 is extended to a position adjacent to a tire maximum width position P on a surface of the tire side portion 30. The outer end 40e is located at an inner side in the tire radial direction with respect to the tire maximum width position P.

The carcass 40 has a radial structure including a carcass cord (not shown) arranged radially along the tire radial direction. However, the carcass 40 is not limited to the radial structure, and therefore the carcass 40 may have a bias structure including a carcass cord arranged to cross the tire radial direction.

A belt layer 50 is arranged at an inner side in the tire radial direction of the tread portion 20. The belt layer 50 is formed by a plurality of belts (for example, four to six belts), each of the belts having a cord.

The bead portion 60 is located at an inner side in the tire radial direction of the tire side portion 30. The bead portion 60 is locked to a rim portion of the rim wheel while contacting the rim portion. The bead portion 60 is formed in a circular shape along a tire circumferential direction.

A chafer 80 is formed to cover at least a part of the bead portion 60. Specifically, the chafer 80 is arranged at an outer side of the carcass 40 so as to cover a part of the bead portion 60 along the carcass 40. The chafer 80 may be formed by a wire, or may be formed by an organic fiber similar to a chafer 100, however in the present embodiment, the chafer 80 is formed by nylon.

The chafer 100 is formed to cover at least a part of the bead portion 60, similar to the chafer 80. The chafer 100 is arranged between a bead core 61 and the carcass 40.

The chafer 100 is, for example, a sheet member formed by coating organic fiber cords aligned in a parallel manner with a rubber component. The chafer 100 is arranged in a circular manner along the tire circumferential direction. The organic fiber cord is preferably formed by aliphatic polyamide (nylon).

(2) Position of chafer 100

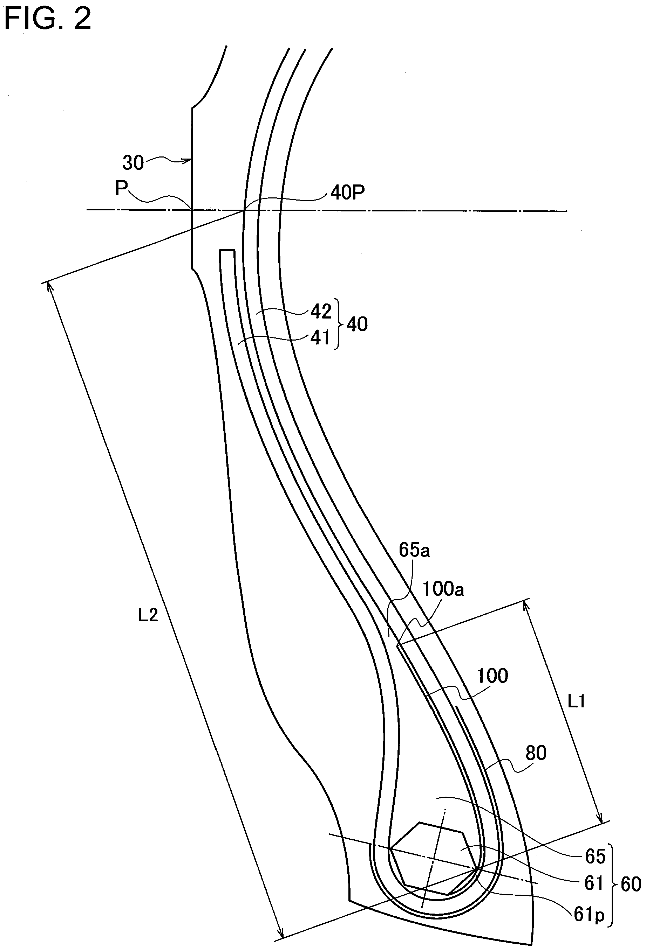

Fig. 2 is a cross-sectional view along the tire width direction and the tire radial direction illustrating a part of the heavy load tire 10. Specifically, Fig. 2 enlarges and shows a portion of the heavy load tire 10 at the inner side in the tire radial direction with respect to the tire maximum width position P.

As shown in Fig. 2, the bead portion 60 includes the bead core 61 and a bead filler 65. In the present embodiment, a section of the bead core 61 is a hexagonal shape. That is, the bead core 60 is formed in a hexagonal shape in a sectional view along the tire width direction and the tire radial direction.

The bead filler 65 is arranged at the outer side in the tire radial direction of the bead core 61. The bead filler 65 may be called a stiffener.

The bead filler 65 is arranged to fill a space formed by the carcass 40 folded via the bead core 61 from the inner side in the tire width direction toward the outer side in the tire width direction. The bead filler 65 is formed by a rubber component harder than a rubber component forming the tire side portion 30.

As described above, the chafer 100 is arranged between the bead core 61 and the carcass 40. Further, the chafer 100 fulfills a dimensional and positional relation described below in the heavy load tire 10.

Specifically, a distance L1 is defined by a linear distance between a bead innermost portion 61p, which is a portion of the bead core 61 at an innermost side in the tire width direction, and an outer end 100a, which is an outer end in the tire radial direction of the chafer 100. Further, a distance L2 is defined by a linear distance between the bead innermost portion 61p and a carcass outermost portion 40p, which is a portion of the carcass body portion 42 at an outermost side in the tire width direction. The chafer 100 fulfills a relation represented by an expression 1.

Formula 2

$$\frac{L1}{L2} \le \frac{5}{12} \quad \cdots \text{(expression 1)}$$

Here, each of the distance L1 and the distance L2 is measured on the heavy load tire 10 that is not mounted to the rim wheel and to which a load is not applied. In an actual measurement, the heavy load tire 10 that is cut along the tire width direction and the tire radial direction may be adopted. In such a case, the heavy load tire 10 may be arranged in either of a laid manner or a standing manner, however each of the distance L1 and the distance L2 is measured from a portion where the deformation due to the contact with the ground or the like is not caused.

Further, it is preferable that the chafer 100 fulfills a relation represented by an expression 2.

Formula 3

$$\frac{1}{24} \le \frac{L1}{L2} \le \frac{5}{12} \quad \cdots \text{(expression 2)}$$

In Fig. 2, the distance L1 and the distance L2 are illustrated by using a leader line for convenience of description. In the actual measurement, the distance between the bead innermost portion 61p and the outer end 100a and the distance between the bead innermost portion 61p and the carcass outermost portion 40p are measured directly.

Further, the outer end 100a of the chafer 100 is offset from an outer end 65a, which is an outer end in the tire radial direction of the bead filler 65. That is, a position of the outer end 100a is different from a position of the outer end 65a in the tire radial direction.

(3) Configuration of bead portion 60

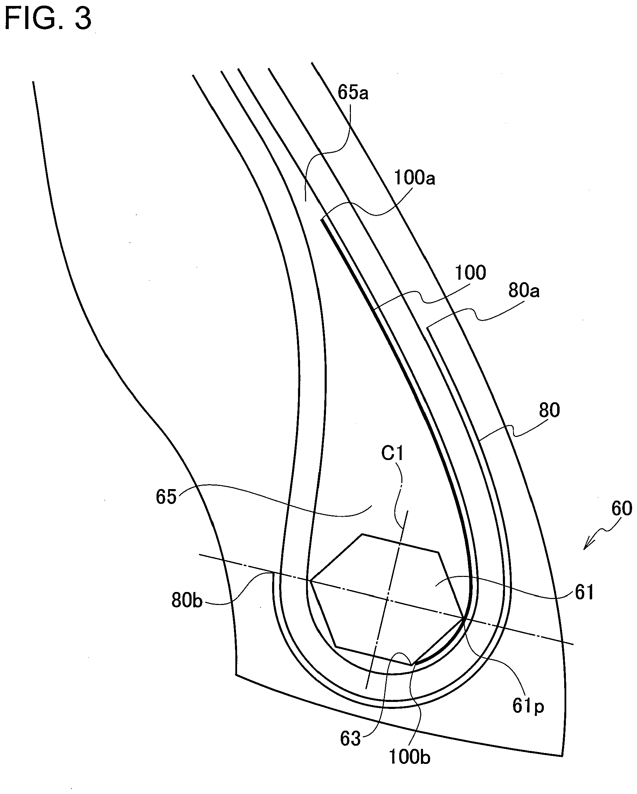

Fig. 3 is an enlarged cross-sectional view along the tire width direction and the tire radial direction illustrating the bead portion 60 of the heavy load tire 10.

As shown in Fig. 3, an inner end 100b, which is an inner end in the tire radial direction of the chafer 100, is extended to the inner side in the tire radial direction with respect to the bead innermost portion 61p of the bead core 61.

As described above, the section of the bead core 61 is a hexagonal shape, and the bead innermost portion 61p corresponds to one apex of the hexagonal shape. The inner end 100b is extended to the inner side in the tire radial direction with respect to the bead innermost portion 61p and is terminated at the outer side in the tire radial direction with respect to an apex 63, which is an apex of the bead core 61 (hexagon) at the inner side in the tire radial direction with respect to the bead innermost portion 61p.

The inner end 100b, which is an inner end in the tire radial direction of the chafer 100, is located at the inner side in the tire width direction with respect to a core center line C1 passing a center of the bead core 61 and a center portion of a lower end part of the bead core 61.

The outer end 80a, which is an outer end in the tire radial direction of the chafer 80, is located at the inner side in the tire radial direction with respect to the outer end 100a of the chafer 100. Further, the inner end 80b, which is an inner end in the tire radial direction of the chafer 80, is located at the outer side in the tire width direction with respect to the inner end 100b.

The inner end in the tire radial direction (inner end 80b and inner end 100b) denotes an end portion in the tire radial direction of the chafer, and does not always correspond to a portion located at the innermost side in the tire radial direction.

(4) Functions and effects

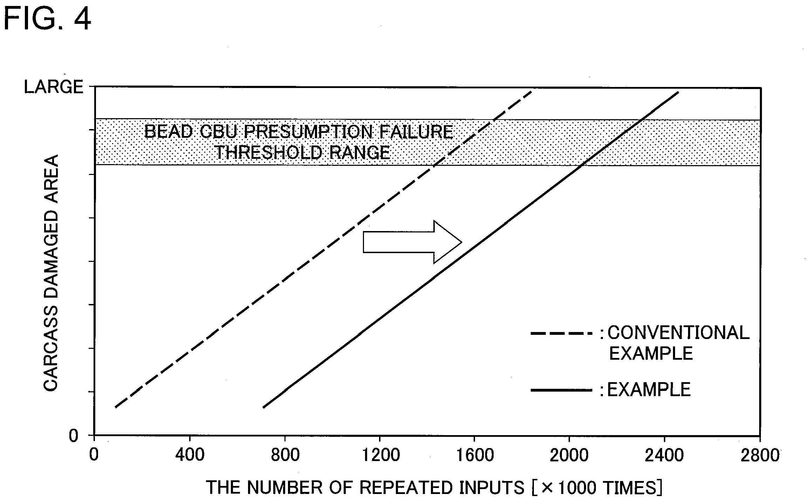

Next, functions and effects of the heavy load tire 10 will be described. Fig. 4 is a graph illustrating a simulation example based on a result of a durability test according to a conventional example and an example (heavy load tire 10). A test method and a test condition of the durability test are as described below.

Tire size: 59/80R63

Test method: continuous driving using a drum test machine (repeated load is input)

The conventional example is different in presence/absence of the chafer 100 from the heavy load tire 10. Specifically, the heavy load tire 10 includes the chafer 100, and the distance L1 is approximately 200 mm and the distance L2 is approximately 600 mm. While, the conventional example does not include the chafer 100.

As shown in Fig. 4, a repeated load is input into the heavy load tire as a test target, and a damaged area of the carcass (damaged width in the tire radial direction × damaged width in the tire circumferential direction) is measured. In the conventional example, a damaged area having a certain area was generated in 90 hours after the test was started (the number of the input of the repeated loads is approximately 200,000 times). While, in the example, the damaged area having the same area as the certain area was generated in 330 hours after the test was started (the number of the input of the repeated loads is approximately 700,000 times).

A presumption failure threshold range where a CBU (Cord Braking Up) in which the cord forming the carcass (carcass cord) is broken is presumed to be caused, was set based on the result of the durability test, and then a simulation relating to the number of the input of the repeated loads (hour) until the CBU is caused was executed.

According to a result shown in Fig. 4, in the example, the durability (lifetime) is thought to be improved by 35% compared to the conventional example.

That is, in the heavy load tire 10, the chafer 100 arranged between the bead core 61 and the carcass 40 is arranged to fulfill the relation represented by the expression 1 described above. Thus, since the chafer 100 is arranged to cover the boundary between the bead core 61 and the bead filler 65, even if a separation between the bead core 61 and the bead filler 65 is caused due to the input of the repeated loads, the bead core 61 is hardly brought into contact with the carcass 40 directly.

The CBU describe above is caused because, when the separation between the bead core 61 and the bead filler 65 is caused, the bead core 61 contacts the carcass 40 and thereby the carcass 40 is scraped, and then the cord forming the carcass 40 is finally broken (fatigue failure).

Further, since the chafer 100 is arranged to fulfill the relation represented by the expression 1, the chafer 100 can be sufficiently arranged only in a necessary area, and thereby an increase of the weight of the heavy load tire 10 can be suppressed. Further, since a use amount of the chafer 100 can be suppressed, a manufacturing cost of the heavy load tire 10 can be suppressed.

That is, in a case in which a ratio L1/L2 is more than 5/12, the chafer 100 is too large and the use amount of the chafer 100 is increased. With a configuration in which $L1/L2 \leq 5/12$ is fulfilled and the bead innermost portion 61p, which is a portion at the innermost side in the tire width direction of the bead core 61, is protected by the chafer 100, the effect described above can be obtained.

Further, as described above, it is preferable that the chafer 100 fulfills the relation represented by the expression 2. This is because, in a case in which the ratio L1/L2 is less than 1/24, the rigidity of the member forming the chafer 100 is deteriorated, and thereby the separation or the like is easily caused by the repeated loads input to or around the bead portion 60.

In this way, according to the heavy load tire 10 can further improve the durability of the bead portion 60 while suppressing the increase of the weight of the tire.

In the present embodiment, the inner end 100b of the chafer 100 is extended to the inner side in the tire radial direction with respect to the bead innermost portion 61p. Thus, the carcass 40 can be effectively prevented from being scraped due to the contact of the apex of the bead core 61 corresponding to the bead innermost portion 61p. With this, the durability of the bead portion 60 can be further improved.

In the present embodiment, the outer end 100a of the chafer 100 is offset from the outer end 65a of the bead filler 65. Thus, generation of deformation and strain, which causes unfavorable failure, around the outer end 65a of the bead filler 65 can be prevented. With this, the durability of the bead portion 60 can be further improved.

(5) Other embodiments

As described above, the contents of the present invention are described with reference to the examples, however the present invention is not limited to those descriptions. It is obvious for a person skilled in the art to adopt various modifications and improvement.

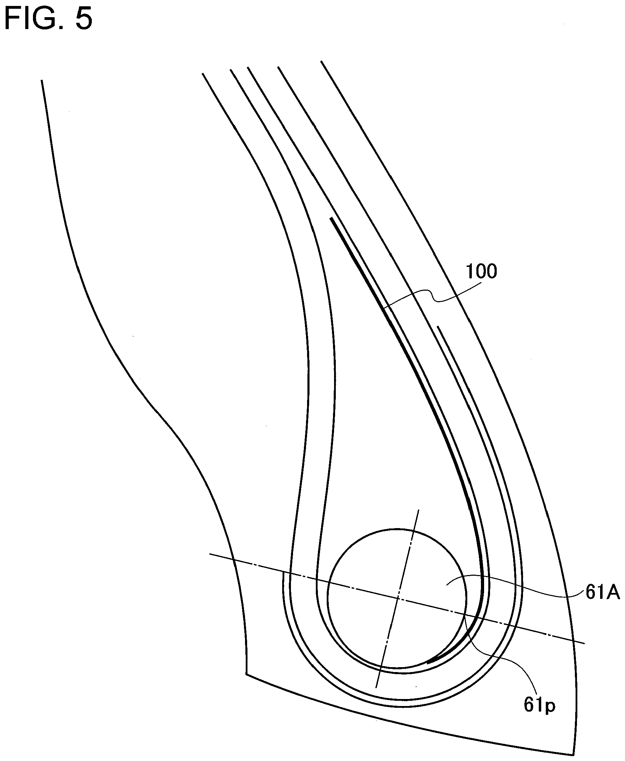

For example, the configuration of the bead portion 60 may be modified as below. Fig. 5 is an enlarged cross-sectional view illustrating a bead portion 60 according to a modified example.

As shown in Fig. 5, a section of a bead core 61A is not a hexagonal shape but a circular shape. In this case, a bead innermost portion 61p denotes a portion at an inner most in the tire width direction of the bead core 61A. Here, the tire width direction is defined as a direction parallel to a straight line passing a toe and a heel of the bead portion 60.

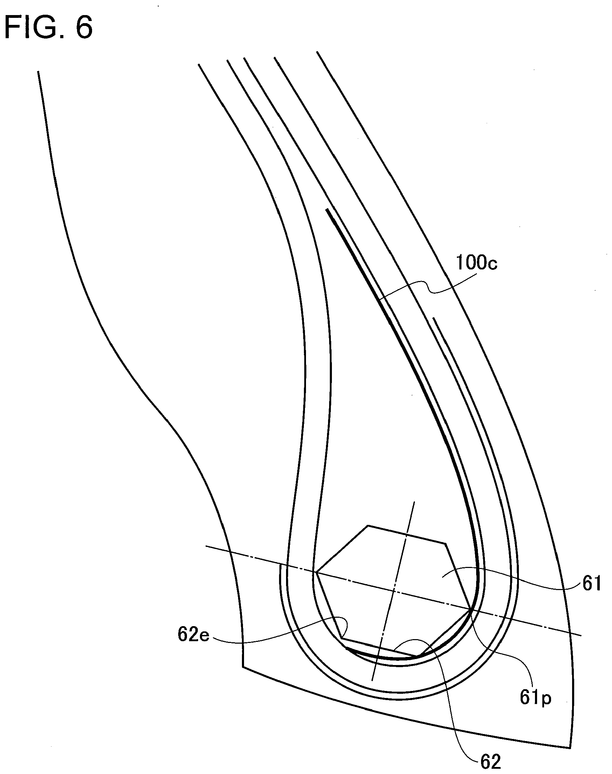

Further, the position of the chafer 100 may be modified as below. Fig. 6 is an enlarged cross-sectional view illustrating a bead portion 60 according to another modified example.

As shown in Fig. 6, the section of the bead core 61 is a hexagonal shape as described above. Specifically, the bead core 61 is formed in a hexagonal shape having a bottom surface 62 along the tire width direction formed at an inner side in the tire radial direction.

A chafer 100C is different in a position of an inner end 100b from the chafer 100. Specifically, the inner end 100b of the chafer 100C is extended to an end 62e at an outer side in the tire width direction of the bottom surface 62.

Further, it is preferable that the inner end 100b of the chafer 100C is extended to an inner side in the tire radial direction of the bead core 61 and is offset from a center in the tire width direction of the bead core 61. Thus, generation of a rigidity difference can be prevented at a center portion in the tire width direction of the bead core 61 to which a heavy load is applied. With this, the durability of the bead portion 60 can be further improved.

Further, in the embodiments described above, the organic fiber cord forming the chafer 100 is formed by aliphatic polyamide (nylon), however the organic fiber cord may be formed by other organic fiber cord such as an aramid fiber.

In the embodiments described above, the chafer 80 is provided, however the chafer 80 may not be provided.

In the embodiments described above, the heavy load tire 10 is preferably used in a construction vehicle or an industrial vehicle, however the heavy load tire 10 may be used as a tire for trucks or buses.

As described above, the embodiments of the present invention are described, however the present invention is not limited to the description and the drawings forming a part of the present disclosure. Various modifications, examples, and operation techniques will be apparent from the present disclosure to a person skilled in the art.

[Industrial Applicability]

The heavy load tire described above is useful to further improve the durability of the bead portion while suppressing the increase of the weight of the tire.

[Reference Signs List]

| | |
|---|---|
| 10: | heavy load tire |
| 20: | tread portion |
| 30: | tire side portion |
| 40: | carcass |
| 40p: | carcass outermost portion |
| 41: | folded portion |
| 42: | carcass body portion |
| 50: | belt layer |
| 60: | bead portion |
| 61, 61A: | bead core |
| 61p: | bead innermost portion |
| 62: | bottom surface |
| 62e: | end |

| 63: | apex |
| 65: | bead filler |
| 65a: | outer end |
| 80: | chafer |
| 80a: | outer end |
| 80b: | inner end |
| 100, 100C: | chafer |
| 100a: | outer end |
| 100b: | inner end |

**Claims**

1. A heavy load tire comprising:

   a bead portion including a bead core;
   a carcass including a folded portion folded from an inner side in a tire width direction toward an outer side in the tire width direction of the bead portion and a carcass body portion continued to the folded portion and extended to a tread portion; and
   a chafer that covers at least a part of the bead portion,
   wherein the chafer is arranged between the bead core and the carcass and is formed by an organic fiber coated with a rubber component, and
   wherein, as a distance L1 is defined by a linear distance between a bead innermost portion, which is a portion of the bead core at an innermost side in the tire width direction, and an outer end in a tire radial direction of the chafer, and a distance L2 is defined by a linear distance between the bead innermost portion and a carcass outermost portion, which is a portion of the carcass body portion at an outermost side in the tire width direction, Formula 1 is fulfilled.

   $$\text{Formula 1}$$

   $$\frac{L1}{L2} \leq \frac{5}{12}$$

2. The heavy load tire according to claim 1, wherein an inner end in the tire radial direction of the chafer is extended to an inner side in the tire radial direction with respect to the bead innermost portion.

3. The heavy load tire according to claim 1, wherein an inner end in the tire radial direction of the chafer is extended to an inner side in the tire radial direction of the bead core and is offset from a center in the tire width direction of the bead core.

4. The heavy load tire according to claim 1, wherein the bead core is formed in a hexagonal shape having a bottom surface along the tire width direction formed at an inner side in the tire radial direction, in a sectional view along the tire width direction and the tire radial direction, and
   wherein an inner end in the tire radial direction of the chafer is extended to an end at an outer side in the tire width direction of the bottom surface.

5. The heavy load tire according to claim 1, wherein the bead portion includes a bead filler arranged at an outer side in the tire radial direction of the bead core, and
   wherein the outer end in the tire radial direction of the chafer is offset from an outer end in the tire radial direction of the bead filler.

6. The heavy load tire according to claim 1, wherein the organic fiber is formed by aliphatic polyamide.

# FIG. 1

10

50  20

CL

30

P

42 } 40
41

40e

100

80

61
60

TIRE RADIAL DIRECTION

TIRE WIDTH DIRECTION

# FIG. 2

FIG. 3

FIG. 4

FIG. 5

FIG. 6

## INTERNATIONAL SEARCH REPORT

| International application No. |
|---|
| PCT/JP2018/023284 |

**A. CLASSIFICATION OF SUBJECT MATTER**
Int.Cl. B60C15/06(2006.01)i

According to International Patent Classification (IPC) or to both national classification and IPC

**B. FIELDS SEARCHED**

Minimum documentation searched (classification system followed by classification symbols)
Int.Cl. B60C1/00-19/12

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-100062 A (BRIDGESTONE CORPORATION) 23 May 2013, claims, paragraphs [0019], [0036], fig. 1 (Family: none) | 1-3, 6<br>1-6 |
| Y | JP 2010-23834 A (THE GOODYEAR TIRE & RUBBER COMPANY) 04 February 2010, claims, paragraph [0001], fig. 1, 2 & US 2010/0018626 A1, claims, paragraph [0001], fig. 1, 2 & EP 2147805 A2 & BR PI0902390 A | 1-6 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 September 2018 (10.09.2018) | 18 September 2018 (18.09.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/023284

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-345593 A (THE YOKOHAMA RUBBER CO., LTD.) 09 December 2004, claims (Family: none) | 1-6 |
| A | JP 2012-106531 A (SUMITOMO RUBBER INDUSTRIES, LTD.) 07 June 2012, claims & CN 102463854 A | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006168500 A